# EUROPEAN PATENT APPLICATION

(11) **EP 1 903 007 A1**
(43) Date of publication of application: **26.03.2008**
(21) Application number: 06019824.9
(22) Date of filing: 22.09.2006
(51) Int. Cl.: C01B 33/033, C01B 33/037

(54) **Process for the production of germanium-bearing silicon alloys**

(71) Applicant: Umicore, 1000 Brussels (BE)
(72) Inventor: Robert, Eric, 2250 Olen (BE); Zijlema, Tjakko, 2250 Olen (BE)
(74) Representative: Umicore RDI Patent Department

(57) **Abstract**

The invention relates to the manufacture of high purity germanium-bearing silicon alloys as a base material for the production of silicon solar cells.

Gaseous SiCl₄ and GeCl₄ are converted to metals by contacting them with liquid Zn, thereby obtaining a Ge-bearing Si alloy and Zn-chloride, which is separated. The alloy is then purified by heating it at a temperature above the boiling point of Zn.

This process does not require complicated technologies and preserves the high purity of SiCl₄ and GeCl₄ towards the end product. The only other reactant is Zn, which can be obtained in very high purity grades, and which can be recycled after electrolysis of the Zn-chloride.

## Description

The invention relates to the manufacture of Ge-bearing solar grade silicon as a feedstock material for the manufacture of crystalline silicon solar cells. The alloy is obtained by direct reduction of GeCl₄ and SiCl₄, which are commonly available in high purity grades.

For the manufacture of solar cells based on polycrystalline Si, the Si is sometimes alloyed with Ge. The addition of about 2 wt. % of Ge has indeed been reported to have the potential to enhance the efficiency of polycrystalline Si solar cells through an increase of minority carrier lifetime and/or optical absorption coefficient

Silicon suitable for application in solar cells is commonly manufactured by the thermal decomposition of SiHCl₃ according to the Siemens process or its variants. The process delivers very pure silicon, but it is slow, highly energy consuming, and requires large investments.

An alternative route towards the formation of Si for solar cells is the reduction of SiCl₄ with metals such as Zn. This process has the potential for significant cost reduction because of lower investment costs and reduced energy consumption.

The direct reduction of SiCl₄ by Zn in the vapour phase is described in US 2,773,745, US 2,804,377, US 2,909,411 or US 3,041,145. When Zn vapour is used, a granular silicon product is formed in a fluidised bed type of reactor, enabling easier Si separation. However, an industrial process based on this principle is technologically complex.

The direct reduction of SiCl₄ with liquid Zn is described in JP 11-092130 and JP 11-011925. Si is formed as a fine powder and separated from the liquid Zn by entraining it with the gaseous ZnCl₂ by-produet. This process is however not practical because the selection of operating conditions leading to the entrainment of a major part of the Si with the gaseous flux appears to be critical. Also, the subsequent separation of the fine Si powder from the ZnCl₂ is problematic as well as the handling and melting of the fine Si powder. The ZnCl₂ has moreover to be vaporized twice, leading to a poor global energetic efficiency of the process.

When it is desired to manufacture Ge-alloyed Si, metallic Ge is usually added as such, upon melting the Si. Ultra-pure, and thus expensive Ge is needed, as impurities introduced at this stage will end up in the final product

It is an object of the present invention to provide a solution for the problems in the prior art.

To this end, according to this invention, high purity Ge-bearing Si alloy is obtained by a process for converting SiCl₄ and GeCl₄ to a Ge-bearing Si alloy, comprising the steps of:
- contacting SiCl₄ and GeCl₄ with a liquid metal phase containing Zn, thereby obtaining a Si-and Ge-bearing metal phase and Zn-chloride;
- separating the Zn-chloride from the Si- and Ge-bearing metal phase; and
- purifying the Si- and Ge-bearing metal phase at a temperature above the boiling point of Zn, thereby vaporising Zn and obtaining Ge-bearing Si alloy,
characterised in that the contacting and the separation steps are performed in a single reactor.

The total amounts of SiCl₄ and GeCl₄ introduced in contacting step are preferably chosen so as to obtain a Ge-bcaring Si alloy with 1 to 5 wt.% of Ge.

It is useful to combine the contacting and the separating steps, by operating the contacting step at a temperature above the boiling point of Zn-chloride, which evaporates.

The Si- and Ge-bearing metal phase as obtained in the contacting step can advantageously contain, besides Si as solute, also at least some Si in the solid state, e.g. as suspended particles. Formation of particular Si may indeed occur during the contacting step, when the Zn metal gets saturated in Si. Solid state Si and Ge can also be obtained by cooling the Si- and Ge-bearing metal phase as obtained in the contacting step, preferably to a temperature of between 450 and 600 °C The solids can preferably be separated from the bulk of the molten phase, e.g. after settling. They form an enriched Si- and Ge-bearing metal phase, which is however still impregnated with Zn and has to be further processed in the purification step.

It is advantageous to perform the contacting step by blowing SiCl₄ and GeCl₄ into a bath comprising molten Zn at a flow rate adapted to limit the loss of Si by entrainment with evaporating Zn-chloride, to less than 15% (weight). To this end, a gas flow rate below 0.8 kg/min per m² of bath surface is suitable. It is preferred to inject the gasses through a submerged porous plug, as this ensures a homogeneous gas distribution in the melt. The gasses can be injected along with a carrier gas such as N₂.

It is useful to operate the purification step at a temperature above the melting point of the Ce-bearing Si alloy, and, in particular, at reduced pressure or under vacuum.

It is also advantageous to recycle one or more of the different streams which are not considered as end-products:
- the obtained Zn-chloride can be subjected to molten salt electrolysis, thereby recovering Zn, which can be recycled to the contacting step, and chlorine, which can be recycled to a Si and/or Ge chlorination process for the production of SiCl₄ and/or GcCl₄;
- Zn that is vaporised in the purification step can be condensed and recycled to the contacting step; and/or- the fraction of SiCl₄ and GeCl₄ that exits the contacting step un-reacted can be recycled to the contacting step.

When the purification step is performed above the melting point of the Ge-bearing Si alloy, the alloy can be solidified only once, using e.g. ribbon growth or directional solidification. The ribbon growth method includes its variants, such as ribbon-growth-on-substrate (RGS), which directly yields RGS Si wafers.

Alternatively, the molten silicon can be granulated, the granules being fed to a melting furnace, preferably in a continuous way, whereupon the molten silicon can be solidified in a single step, again using e.g. ribbon growth or directional solidification,

The solid material obtained can then be further processed to solar cells, directly or after wafering, according to the solidification method used.

According to this invention, suitable amounts of SiCl₄ and of GeCl₄, are injected into liquid Zn. Both products can be injected simultaneously or sequentially, in any order. It is experienced that the conversion yield of GcCl₄ is nearly quantitative, whilst the conversion of SiCl₄ typically is somewhat lower. The exact yields will depend on the specific configuration of the reactor and of the chosen temperatures and gas flow rates. The operator will thus have to monitor the Ge to Si alloying ratio and adapt the flow rates of SiCl₄ and GeCl₄ in a straightforward and known way to correct any deviation from the desired ratio. Making use of the same apparatus for Ge-alloying as for the Si production renders this scheme particularly attractive and economic GeCl₄ is indeed a relatively cheap source of ultra-pure Ge, and the direct reduction with liquid zinc avoids the multiple steps according to the usual ultra-pure Ge production process.

A Ge- and Si-bearing Zn alloy containing both dissolved and solid Si can be obtained, while the chlorinated Zn either forms a separate liquid phase, or is formed as a vapour. Zn can be retrieved from its chloride, e.g. by molten salt electrolysis, and reused in de contacting step. The alloy can be purified at high temperatures, above the boiling points of both Zn and Zn-chloride, but below the boiling point of the Si ( 2355 °C). The evaporated Zn can be retrieved and reused Any other volatile element is also removed in this step. It is thus possible to close the loop on Zn, thereby avoiding the introduction of impurities into the system through fresh additions.

In a preferred embodiment according to the invention, gaseous GeCl₄ and SiCl₄ are contacted with liquid Zn at atmospheric pressure, at a temperature above the boiling point of ZnCl₂ (732 °C) and below the boiling point of Zn (907 °C). The preferred operating temperature is 750 to 880 °C, a range ensuring sufficiently high reaction kinetics, while the evaporation of metallic Zn remains limited.

In a typical embodiment, the molten Zn is placed in a reactor, preferably made of quartz or of another high purity material such as graphite. Both SiCl₄ and GeCl₄, which are liquid at room temperature, are injected via a submerged tube. The injection is performed at the bottom of the Zn-containing vessel. The liquid chlorides are heated during their transit in the tube, and are actually injected as gases. The end of the injection tube is provided with a dispersion device such as a porous plug or fritted glass. It is indeed important to have a good contact between the gaseous chlorides and the Zn to get a high reduction yield. If this is not the case, partial reduction could occur. Finely dispersing the gasses has been demonstrated to be a major factor in limiting the entrainment of particulate Si with the gaseous flow.

The reduction process produces ZnCl₂. It has a boiling point of 732 °C, and is gaseous at the preferred operating temperature. It leaves the Zn-containing vessel via the top. The vapours are condensed and collected in a separate crucible.

The process also produces metallic Si and Gc. Both dissolve in the molten Zn up to their solubility limit. The Si solubility in the Zn increases with temperature but remains limited to about 4% at 907 °C, the atmospheric boiling point of pure Zn. Ge is markedly more soluble.

In a first advantageous embodiment of the invention, the injected amount of SiCl₄ is such that the solubility limit of Si in Zn is exceeded. Solid, particulate Si is produced, which may remain in suspension in the molten Zn bath and/or aggregate so as to form dross. This results in a Zn metal phase with total (dissolved, suspended and drossed) Si concentration of preferably more than 10%, i.e. considerably higher than the solubility limit. This minimises the specific Zn consumption (number of kg Zn needed per kg alloy produced), allowing for a more efficient and economic purification step. Any particulate Si is however subject to losses by entrainment with the gaseous ZnCl₂ stream. This risk can be minimised by using a sufficiently low gas flow rate and/or means ensuring the dispersion of the gasses into the Zn melt A Si loss by entrainment of less than 15% of the total input to the process is considered as acceptable.

In a second advantageous embodiment according to the invention, the Si-and Ge-bearing Zn alloy is allowed to cool down to a temperature somewhat above the melting point of the Zn, e.g. 600 °C. Upon cooling, a major part of the initially dissolved Si crystallizes together with some Ge, and accumulates together with any solid Si that was already present in the bath in an upper solid fraction. The lower liquid fraction of the metal phase is Si- and Ge-depleted, and can be separated by any suitable means, e.g. by pouring. This metal can be directly re-used in a subsequent contacting step. The upper solid fraction is subjected to the purification as mentioned above, with the advantage that the amount of Zn to be evaporated is considerably reduced.

Both of the above first and second advantageous embodiments can be combined.

The Zn, together with typical trace impurities such as Tl, Cd and Pb, can be separated from the Ge-bearing Si alloy by vaporisation at a temperature above the boiling point of Zn (907 °C). A purity of 5N to 6N is then obtained. A special high temperature sparging or bubbling step with a gaseous Si or Ge chloride or with Cl₂ typically leads to an even superior purity. For this operation, the temperature is further increased above the melting point (about 1400 °C) but below the boiling point of (about 2355 °C) of the Si. Some of the elements that can be eliminated by this process step are Cr, Cu, Mn, Al, Ca, B and P. It is noteworthy that Ge is not eliminated during this process.

A further advantage of the invention is that the Ge-bearing Si alloy can be recovered in the molten state at the end of the purification process. Directly obtaining the Ge-bearing Si alloy in the molten state allows for a better integration of the feedstock production with the steps towards wafer production, providing an additional reduction in the total energy consumption of the process as well as in the cost of the wafer manufacturing. The liquid alloy can indeed be solidified in a single step, directly yielding ingots, or substrates if a ribbon growth method is used

If one does not wish to produce ready-to-wafer material, but only intermediate solid feedstock, it appears advantageous to granulate the purified alloy. The obtained granules are easier to handle and to dose than the chunks obtained in e.g. the Siemens-based processes.

### Example 1

The following example illustrates the invention. 8500 g of metallic Zn is heated to 850 °C in a graphite reactor The height of the bath is about 19 cm and its diameter is 9 cm. A Minipuls^{™} peristaltic pump is used to introduce GeCl₄ in the reactor via a quartz tube. The immersed extremity of the tube is fitted with a porous plug made of quartz. The GeCl₄ vaporises in the immersed section of the tube and is dispersed as a gas in the liquid Zn. 50g of GeCl₄ is injected, with a flow rate of ca. 250 g/h. The ZnCl₂, which evaporates during the reaction, condenses in a graphite tube connected to the reactor and is collected in a separate vessel. Any un-reacted GeCl₄ is collected in a wet scrubber connected to the ZnCl₂ vessel. The formed Ge dissolves completely in the zinc.

Then, 5500 g of SiCl₄ is injected in the same way, with a flow rate of ca. 250 g/h. This corresponds to 0.66 kg/min per m² of bath surface. The evaporating ZnCl₂ is again condensed and collected. Any un-reacted SiCl₄ is collected in a wet scrubber connected to the ZnCl₂ vessel. A Ce-bearing Si alloy, saturated in Si at the prevalent reactor temperature, is obtained. The total Si content of the mixture is 16.2%. It is sufficient to increase the amount of SiCl₄ added, at the same flow rate of 250 g/h, to increase the amount of solid Si in the alloy, The alloy is heated to 1500 °C to evaporate the Zn, which is condensed and recovered. The alloy is then allowed to cool down to room temperature; 853.7 g of alloy is recovered, containing 1.98% of Ge.

54g of metallic Si is found in the ZnCl₂, as well as traces of Ge. This is attributed to the entrainment of particles of Si of Ge with the escaping ZnCl₂ vapours. In the scrubber, 18g of Si is found, with again only traces of Ge, corresponding to un-reacted chlorides.

## Claims

1. Process for converting SiCl₄ and GeCl₄ into a Ge-bearing Si alloy, comprising the steps of:
- contacting SiCl₄ and GeCl₄ with a liquid metal phase containing Zn, thereby obtaining a Si- and Ge-bearing metal phase and Zn-chloride;
- separating the Zn-chloride from the Si- and Ge-bearing metal phase; and
- purifying the Si- and Go-bearing metal phase at a temperature above the boiling point of Zn, thereby vaporising Zn and obtaining Ge-bearing Si alloy,
**characterised in that** the contacting and the separation steps are performed in a single reactor.

2. Process according to claim 1, whereby the total amounts of SiCl₄ and GeCl₄ introduced in contacting step are chosen so as to obtain a Ge-bearing Si alloy with 1 to 5 wt.% of Ge.

3. Process according to claims 1 or 2, wherein the contacting and the separating steps are performed simultaneously, by operating them at a temperature above the boiling point of Zn-chloride, which evaporates.

4. Process according to any of claims 1 to 3, wherein the Si- and Ge-bearing metal phase that is obtained in the contacting step, contains at least part of the Si in the solid state.

5. Process according to any of claims 1 to 4, wherein a cooling step of the Si- and Ge-bearing metal phase, preferably to a temperature of between 450 and 600 °C, is inserted before the purification step, thereby converting at least part of the Si and of the Ge present as a solute in the Si- and Ge-bearing metal phase that is obtained in the contacting step, to the solid state.

6. Process according to claims 4 or 5, whereby the Si and Ge present in the solid state is separated, forming the Si- and Ge-bearing metal phase that is further processed in the purification step.

7. Process according to claims 1 to 6, wherein the contacting step is performed by injecting SiCl₄ and GeCl₄ into a bath comprising molten Zn, at a flow rate adapted to limit the loss of Si by entrainment with evaporating Zn-chloride to less than 15%.

8. Process according to claim 7, whereby the flow rate of gas injection is lower than 0.8 kg/min per m² of bath surface.

9. Process according to any one of claims 1 to 8, whereby the purification step is performed at a temperature above the melting point of the Ge-bearing Si alloy, thereby forming purified liquid Ge-bcaring Si alloy.

10. Process according to claim 9, whereby the purification step is performed at reduced pressure or under vacuum.

11. Process according to any one of claims I to 10, further comprising the steps of:
- subjecting the separated Zn-chloride to molten salt electrolysis, thereby recovering Zn and chlorine;
- recycling the Zn to the contacting step; and
- recycling the chlorine to a Si and/or Ge chlorination process for the production of SiCl₄ and/or GeCl₄.

12. Process according to any one of claims I to 11, wherein the Zn that is vaporised in the purification step, is condensed and recycled to the contacting step.

13. Process according to any one of claims I to 12, wherein the fractions of SiCl₄ and GeCl₄ that exits the contacting step un-reacted, are recycled to the contacting step.

14. Process according to claims 9 or 10, comprising a single solidification step of the purified liquid Ge-bearing Si alloy using the ribbon growth method or directional solidification in particular.

15. Process according to claims 9 or 10, comprising the granulation of the purified liquid Ge-bearing Si alloy.

16. Process according to claim 15, comprising the steps of:
- feeding the granules to a melting furnace; and
- applying a single solidification step, using the ribbon growth method or directional solidification in particular.

17. Process according to claims 14 or 16, whereby the solid material is wafered and further processed to solar cells.

## Amended claims

### Amended claims in accordance with Rule 137(2) EPC.

**1.** Process for converting SiCl₄ and GeCl₄, into a Ge-bearing Si alloy, comprising the steps of:
- contacting SiCL₄ and GeCl₄, through an injection tube with a liquid metal phase containing Zn, whereby the end of the injection tube is provided with a dispersion device and thereby obtaining a Si- and Ge-bearing metal phase and Zn-chloride; contacting gaseous SiCl₄ with a liquid metal phase containing Zn, thereby obtaining a Si-bearing metal phase and Zn-chloride;
- separating the Zn-chloride from the Si- and Ge-bearing metal phase; and
- purifying the Si- and Ge-bearing metal phase at a temperature above the boiling point of Zn, thereby vaporising Zn and obtaining Ge-bearing Si alloy,
**characterised in that** the contacting and the separation steps are performed in a single reactor.

**2.** Process according to claim 1, whereby the total amounts of SiCl₄ and GeCl₄ introduced in contacting step are chosen so as to obtain a Ge-bearing Si alloy with 1 to 5 wt. % of Ge.

**3.** Process according to claims 1 or 2, wherein the contacting and the separating steps are performed simultaneously, by operating them at a temperature above the boiling point of Zn-chloride, which evaporates.

**4.** Process according to any of claims 1 to 3, wherein the Si- and Ge-bearing metal phase that is obtained in the contacting step, contains at least part ofthe Si in the solid state.

**5.** Process according to any of claims 1 to 4, wherein a cooling step of the Si- and Ge-bearing metal phase, preferably to a temperature of between 450 and 600 °C, is inserted before the purification step, thereby converting at least part of the Si and of the Ge present as a solute in the Si- and Ge-bearing metal phase that is obtained in the contacting step, to the solid state.

**6.** Process according to claims 4 or 5, whereby the Si and Ge present in the solid state is separated, forming the Si- and Ge-bearing metal phase that is further processed in the purification step.

**7.** Process according to claims I to 6, wherein the contacting step is performed by injecting SiCl₄ and GeCl₄ into a bath comprising molten Zn, at a flow rate adapted to limit the loss of Si by entrainment with evaporating Zn-chloride to less than 15%.

**8.** Process according to claim 7, whereby the flow rate of gas injection is lower than 0.8 kg/min per m² of bath surface.

**9.** Process according to any one of claims 1 to 8, whereby the purification step is performed at a temperature above the melting point ofthe Ge-bearing Si alloy, thereby forming purified liquid Ge-bearing Si alloy.

**10.** Process according to claim 9, whereby the purification step is performed at reduced pressure or under vacuum.

**11.** Process according to any one of claims 1 to 10, further comprising the steps of:
- subjecting the separated Zn-chloride to molten salt electrolysis, thereby recovering Zn and chlorine;
- recycling the Zn to the contacting step; and
- recycling the chlorine to a Si and/or Ge chlorination process for the production of SiCl₄ and/or GeCl₄.

**12.** Process according to any one of claims 1 to 11, wherein the Zn that is vaporised in the purification step, is condensed and recycled to the contacting step.

**13.** Process according to any one of claims 1 to 12, wherein the fractions of SiCl₄ and GeCl₄ that exits the contacting step un-reacted, are recycled to the contacting step.

**14.** Process according to claims 9 or 10, comprising a single solidification step of the purified liquid Ge-bearing Si alloy using the ribbon growth method or directional solidification in particular.

**15.** Process according to claims 9 or 10, comprising the granulation ofthe purified liquid Ge-bearing Si alloy.

**16.** Process according to claim 15, comprising the steps of:
- feeding the granules to a melting furnace, and
- applying a single solidification step, using the ribbon growth method or directional solidification in particular.

**17.** Process according to claims 14 or 16, whereby the solid material is wafered and further processed to solar cells.
